# EUROPÄISCHE PATENTSCHRIFT

(11) **EP 2 829 172 B1**
(45) Veröffentlichungstag und Bekanntmachung des Hinweises auf die Patenterteilung: **23.12.2015**
(21) Anmeldenummer: 14170940.2
(22) Anmeldetag: 03.06.2014
(51) Int. Cl.: A01D 90/12, A01D 90/04, A01F 15/10

(54) **Erntemaschine**
Harvester
Moissonneuse

(30) Priorität: 26.06.2013 DE 102013010669
(43) Veröffentlichungstag der Anmeldung: 28.01.2015
(73) Patentinhaber: Alois Pöttinger Maschinenfabrik Ges.m.b.H., 4710 Grieskirchen (AT)
(72) Erfinder: Eder, Florian, 4674 Altenhof am Hausruck (AT); Preimeß, Hans-Jörg, 9811 Lendorf (AT)
(74) Vertreter: Thoma, Michael

(56) Entgegenhaltungen:
- EP-A1- 2 011 383
- EP-A1- 2 449 873
- DE-A1- 3 821 717
- DE-A1- 19 952 463
- DE-U1- 9 308 656

## Beschreibung

Die vorliegende Erfindung betrifft eine Erntemaschine, insbesondere Ladewagen und/oder Ballenpresse, mit einem Schneidwerk, das an einem Messerbalken angeordnete Messer umfasst, die in ihrer Schneidstellung in einen Förderkanal für das Erntegut hineinragen, wobei die Messer durch Verschwenken des Messerbalkens um eine erste Schwenkachse, die sich liegend quer zur Förderkanallängsachse erstreckt, aus dem Förderkanal heraus in eine Zwischenstellung fahrbar sind und durch Verschwenken des Messerbalkens um eine zweite Schwenkachse, die sich quer zu der ersten Schwenkachse erstreckt, nach außen zur Seite eines Chassis der Erntemaschine in eine Seitenstellung fahrbar sind, wobei die erste Schwenkachse lösbare Gelenkteile umfasst, die zum Verschwenken um die zweite Schwenkachse trennbar sind.

Bei Ladewagen und Ballenpressen müssen die Messer, mittels derer das aufgenommene Erntegut zerschnitten wird, regelmäßig nachgeschliffen werden, um einerseits das Erntegut schonend zu zerschneiden, andererseits zu hohe Schnittkräfte und ein Verstopfen des Förderkanals zu vermeiden. Üblicherweise müssen die Messer dabei mehrmals täglich nachgeschliffen werden. Um einen Ein- und Ausbau und damit entsprechende Stillstandszeiten zu vermeiden, wurden bereits am Ladewagen arbeitende Schleifvorrichtungen vorgeschlagen, so z.B. in der DE 35 20 273 A1 oder der DE 33 23 116. Dabei werden üblicherweise die Messer auf einem schwenkbaren Messerbalken angeordnet, so dass sie aus dem Förderkanal heraus in eine Schleifposition geschwenkt werden können. Ein mit einer rotierenden Schleifscheibe versehener Schleifer ist dabei an einem Schwenkarm pendelnd aufgehängt, so dass durch eine Pendelbewegung des Schwenkarms die Schleifscheibe über die üblicherweise bogenförmig gerundete Schneide eines Messers fahrbar ist. Um den Schleifer von Messer zu Messer fahren zu können, ist der genannte Schwenkarm, der den Schleifer trägt, an einer Quertraverse quer zur Schnittrichtung der Messer verschieblich gelagert.

Aus der Schrift EP 2449873 A1 ist es ferner bekannt, die zu schleifenden Messer zusammen mit dem Messerbalken nach außen zur Seite des Chassis der Erntemaschine zu verbringen, um dort das Schleifgerät an die Messer führen zu können. Der Messerbalken ist hierzu geteilt ausgebildet und kann hälftig jeweils translatorisch nach außen gefahren werden.

Das Herausfahren der Messer nach außen seitlich neben den Erntemaschinenkorpus ist jedoch nicht nur für das Schleifen der Messer hilfreich, sondern auch nützlich, um die Schärfe oder den Beschädigungszustand der Messer optisch zu inspizieren, einzelne Messer auszutauschen oder andere Wartungsarbeiten vorzunehmen, wie beispielsweise die Beseitigung von Schmutz, Fremdkörpern und dergleichen. Durch das seitliche Herausfahren der Messer sind diese besser zugänglich und es steht mehr Platz zur Verfügung, um Werkzeug anzusetzen. Zudem muss ein Bediener nicht unter das Chassis der Erntemaschine kriechen.

Alternativ zu dem vorgenannten translatorischen Herausfahren einer Messerbalkenhälfte ist es hierbei auch bekannt, den Messerbalken, sei es als Ganzes oder einen Abschnitt hiervon, um eine zweite Schwenkachse seitlich nach außen zu schwenken, so dass ein insgesamt zweistufiger Schwenkprozess entsteht. Um die Messer, die in ihrer Schneidstellung üblicherweise durch Schlitze in einer Förderkanalwandung hindurch in den Förderkanal ragen, aus dem Förderkanal heraus zu fahren, wird der die Messer tragende Messerbalken um eine liegende, quer zur Förderrichtung durch den Förderkanal verlaufenden ersten Schwenkachse verschwenkt, so dass sich die Messer in einer Zwischenstellung üblicherweise unter dem Chassis der Erntemaschine befinden. Um nun den Messerbalken zusammen mit den daran gelagerten Messern um eine zweite Schwenkachse, die sich quer zur ersten Schwenkachse erstreckt, nach außen zur Seite der Erntemaschine hin verschwenken zu können, muss die erste Schwenkachse gelöst werden, um diese zweite Schwenkbewegung nicht zu behindern. Dies kann beispielsweise durch Herausziehen des Gelenkbolzens der ersten Schwenkachse bewerkstelligt werden, wobei jedoch bisweilen auch noch weitere Teile der Schwenkvorrichtung gelöst werden müssen, beispielsweise der Anlenkpunkt des üblicherweise vorhandenen Hubzylinders für die Schwenkbewegung um die erste Schwenkachse, so dass diese weiteren Teile die Schwenkbewegung um die zweite Schwenkachse nicht behindern. Hierbei sind bisweilen spezielle Reihenfolgen beim Lösen der Teile einzuhalten, was die Bedienung für den Maschinenführer unkommod werden lässt, insbesondere wenn es sich um einen mit der Maschinen nicht vollends vertrauten Neubediener handelt.

Hiervon unabhängig muss der Maschinenführer die Maschinenseite wechseln, da ein entsprechendes Lösen der ersten Schwenkachse üblicherweise auf beiden Maschinenseiten vorzunehmen ist, da der Messerbalken üblicherweise auf beiden Seiten schwenkgelagert ist. Um eine solche zweiseitige Bedienung zu vermeiden, wurde bereits angedacht, über ein Gestänge oder dergleichen eine Bedienung von einer Seite her zu ermöglichen, die die Achsbolzen auf beiden Maschinenseiten ziehen kann, was jedoch relativ komplizierte Übertragermechanismen erfordert und bisweilen zu einer Schwergängigkeit führt.

Eine solche zweiachsig verschwenkbare Schneidvorrichtung an einem Ladewagen zeigt beispielsweise die Schrift DE 199 52 463 A1. Dabei ist der die Messer haltende Messerrahmen um eine horizontale Achse schwenkbar in einem Halterahmen gelagert, so dass die Messer um die genannte horizontale Achse aus dem Förderkanal herausgeschwenkt werden können. Ist dies geschehen, kann der gesamte Halterahmen mit dem daran gelagerten Messerrahmen um eine vertikale Achse nach außen geschwenkt werden, a so dass die Messer neben dem Speicher bzw. neben der Aufnahmevorrichtung zu liegen kommen. Um den Halterahmen derart ausschwenken zu können, müssen jedoch ähnlich der zuvor genannten Weise auf beiden Seiten des Ladewagens vorgesehene Bolzenverriegelungen von Hand gelöst werden.

Hiervon ausgehend liegt der vorliegenden Erfindung die Aufgabe zugrunde, eine verbesserte Erntemaschine der genannten Art zu schaffen, die Nachteile des Standes der Technik vermeidet und letzteren in vorteilhafter Weise weiterbildet. Insbesondere soll eine vereinfachte Handhabung des Schwenkprozesses ohne Zweiseitenbedienung ermöglicht werden.

Erfindungsgemäß wird diese Aufgabe durch eine Erntemaschine gemäß Anspruch 1 gelöst. Bevorzugte Ausgestaltungen der Erfindung sind Gegenstand der abhängigen Ansprüche.

Es wird also vorgeschlagen, den Gelenkteilen der ersten Schwenkachse, die für das Verschwenken des Messerbalkens um die zweite Schwenkachse zu lösen sind, automatisch arbeitende bzw. betätigbare Kupplungsmittel zuzuordnen und diese automatisch so zu steuern, dass die erste Schwenkachse automatisch freigängig bzw. gelöst wird bevor die zweite Stufe der Schwenkbewegung, das heißt das Verschwenken um die zweite Schwenkachse ausgeführt wird. Erfindungsgemäß sind Kupplungsmittel zum automatischen Entkuppeln der lösbaren Gelenkteile der ersten Schwenkachse bei Erreichen der Zwischenstellung vorgesehen. Die Kupplungsmittel können die erste Schwenkachse lösen bzw. freigängig schalten, wenn die erste Stufe der Schwenkbewegung, das heißt das Verschwenken um die erste Schwenkachse zumindest näherungsweise vollständig abgeschlossen und die genannte Zwischenstellung tatsächlich erreicht ist, oder auch schon kurz vor Anfahren bzw. Erreichen der Zwischenstellung. Gegebenenfalls kann das Lösen der ersten Schwenkachse von den Kupplungsmitteln auch mit einem gewissen Zeitversatz nach Erreichen der Zwischenstellung vollendet werden, wobei aber eine Freigabe der ersten Schwenkachse möglichst ohne Zeitversatz oder schon kurz vor Erreichen der Zwischenstellung vorteilhaft ist, um den Schwenkprozess verzögerungsfrei zu Ende bringen und die zweite Schwenkphase unverzüglich starten zu können.

In vorteilhafter Weiterbildung der Erfindung können die genannten Kupplungsmittel winkelabhängig gesteuert sein und in Abhängigkeit der Winkellage des Messerbalkens bezüglich der ersten Schwenkachse arbeiten. Insbesondere können die Kupplungsmittel auskuppeln bzw. die erste Schwenkachse lösen, wenn der Messerbalken aus der Schneidstellung heraus einen vorbestimmten Schwenkwinkel überstrichen hat und/oder einen Schwenkwinkel nahe der Zwischenstellung oder die Zwischenstellung selbst erreicht hat. Hierzu können beispielsweise Winkelerfassungsmittel vorgesehen sein, in Abhängigkeit von deren Signal die Kupplung von einem Stellaktor betätigt wird.

Die Kupplungsmittel können hierbei beispielsweise von einem fremdenergiebetätigten Stellaktor betätigt werden, beispielsweise einem Druckmittelzylinder. Alternativ kann auch eine mechanische Betätigung der Kupplungsmittel vorgesehen sein, die in Abhängigkeit der Schwenkstellung des Messerbalkens bezüglich der ersten Schwenkachse deren lösbaren Gelenkteile freigeben, beispielsweise im Sinne einer mechanischen Zwangssteuerung, die die Schwenkbewegung des Messerbalkens in eine Kupplungsbewegung umsetzt bzw. die Betätigungsbewegung für die Kupplungsmittel von der Schwenkbewegung des Messerbalkens um die erste Schwenkachse ableitet.

Insbesondere können in Weiterbildung der Erfindung die Kupplungsmittel ein zu einer Seite hin offenes Kupplungsmaul umfassen, in dem eines der lösbaren Gelenkteile der ersten Schwenkachse aufnehmbar ist, wobei die offene Seite des Kupplungsmauls in Richtung der Bewegung des Messerbalkens aus der genannten Zwischenstellung heraus in die Seitenstellung ausgerichtet ist, so dass der genannte Gelenkteil aus dem Kupplungsmaul ausfahren kann, wenn der Messerbalken aus der Zwischenstellung in die Seitenstellung verbracht wird bzw. umgekehrt in das Kupplungsmaul einfahren kann, wenn der Messerbalken aus der Seitenstellung zurück in die Zwischenstellung fährt. Das Kupplungsmaul kann mit seiner offenen Seite insbesondere so orientiert sein, dass die Ein- und Ausfahrbewegung des Gelenkteils in das bzw. aus dem Kupplungsmaul im Wesentlichen parallel zu einer Ebene liegt, die senkrecht auf die zweite Schwenkachse steht und/oder parallel zur Bewegungsbahn des Messerbalkens bezüglich der zweiten Schwenkachse ausgerichtet ist, zumindest wenn der Messerbalken nahe der genannten Zwischenstellung bzw. das Kupplungsmaul in einer damit einhergehenden Stellung ist..

In Weiterbildung der Erfindung ist das Kupplungsmaul dabei derart gestaltet, dass es nur in der genannten einen Richtung offen ist bzw. das Ausfahren des Gelenkteils nur in eine Richtung gestattet, während das Schwenkteil in dazu geneigten Richtungen im Kupplungsmaul gefangen ist. Vorteilhafterweise ist das genannte Gelenkteil im Kupplungsmaul drehbar aufgenommen.

Vorteilhafterweise fluchtet die offene Seite des Kupplungsmauls mit der Bewegungsbahn des Messerbalkens bezüglich der zweiten Schwenkachse nur dann, wenn der Messerbalken bezüglich der ersten Schwenkachse in die Zwischenstellung verbracht ist. Insbesondere kann das Kupplungsmaul am Messerbalken oder einem damit verbundenen Trägerteil drehfest angeordnet sein und sich beim Verschwenken des Messerbalkens um die erste Schwenkachse verdrehen bzw. verschwenken derart, dass das Kupplungsmaul nur in der genannten Zwischenstellung des Messerbalkens in Richtung der Bewegung des Messerbalkens aus der Zwischenstellung in die Schneidstellung offen ist und in der eingefahrenen Schneidstellung des Messerbalkens in eine andere Richtung blickt, so dass Bewegungen des Messerbalkens bezüglich der zweiten Schwenkachse blockiert sind.

Die Kupplungsmittel sind also derart ausgebildet, dass sie Bewegungen des Messerbalkens bezüglich der zweiten Schwenkachse nur dann zulassen, wenn die Messer zuvor aus dem Förderkanal herausgefahren und der Messerbalken in die Zwischenstellung verbracht wurde. Sind die Messer noch im Förderkanal bzw. befindet sich der Messerbalken nicht in der Zwischenstellung und/oder in der Schneidstellung, blockieren die Kupplungsmittel ein Lösen der ersten Schwenkachse und verhindern damit Bewegungen des Messerbalkens bezüglich der zweiten Schwenkachse.

In Weiterbildung der Erfindung kann der Messerbalken für die zweite Phase des Herausschwenkprozesse - ggf. auch für die erste Phase des Schwenkprozesses - mehrachsig gelenkig gelagert sein, so dass die Bewegungsbahn zwischen der vorgenannten Zwischenstellung und der Seitenstellung keine kreisbahnförmige Schwenkbewegung um eine feststehende Achse sein muss, natürlich gleichwohl sein kann. Insbesondere kann der Messerbalken über eine Lenkeranordnung mit der zweiten Schwenkachse verbunden sein und/oder es kann die zweite Schwenkachse mittels einer Lenkeranordnung an einem Chassis- oder Trägerteil der Erntemaschine angelenkt sein, so dass sich auch die zweite Schwenkachse selbst bewegen kann.

Die Lenkeranordnung und deren Schwenkachsen können dabei vorteilhafterweise derart konfiguriert sein, dass die Bewegungsbahn der zweiten Schwenkbewegungsphase aus der genannten Zwischenstellung heraus zunächst näherungsweise senkrecht von der liegenden ersten Schwenkachse wegführt, insbesondere in einer etwa bodenparallelen Richtung von dem Förderkanal weg, wobei diese erste Phase des zweiten Schwenkabschnitts noch nicht zur Seite führen muss, sondern beispielsweise nach hinten vom Förderkanal weggerichtet sein kann, um die Gelenkteile der ersten Schwenkachse zu lösen. Nach dieser ersten Phase führt die Schwenkbewegungsbahn bezüglich der zweiten Schwenkachse dann nach außen zur Seite des Erntemaschinenkorpus.

Insbesondere kann die genannte Lenkeranordnung einen Lenker umfassen, der mit einem Ende mit dem Messerbalken verbunden ist und mit seinem anderen Ende gelenkig an einem Chassis- oder Trägerteil der Erntemaschine schwenkbar gelagert ist, insbesondere um die vorgenannte zweite Schwenkachse, die sich im Wesentlichen aufrecht erstrecken kann. Vorteilhafterweise kann diese Schwenkachse des Lenkers aus der Mitte des Förderkanals bzw. aus der Mitte des Messerbalkens heraus zu einer Seite des Erntemaschinenkorpus hin versetzt angeordnet sein, insbesondere etwa in einem äußersten Viertel der Maschinenbreite auf der Seite, zu der der Messerbalken herausgeschwenkt werden soll. Durch einen solchen Querversatz der zweiten Schwenkachse können einerseits bei Einleiten der Schwenkbewegung bezüglich der genannten zweiten Schwenkachse die Gelenkteile der ersten Schwenkachse sauber auskuppeln und/oder außer Eingriff gebracht werden. Zum anderen fährt hierdurch der Messerbalken zunächst nach hinten vom Förderkanal weg und kann dementsprechend seitlich um Schwenkvorrichtungsteile herumgeschwenkt werden, die üblicherweise an einem seitlichen Abschnitt der Erntemaschine angeordnet sein können, um den Messerbalken bezüglich der ersten Schwenkachse anheben und absenken zu können.

Um eine vorteilhafte Bewegungsbahn für das seitliche Herausschwenken zu erhalten, kann der genannte Schwenklenker in der genannten Zwischenstellung des Messerbalkens eine Stellung einnehmen, die sich von dem genannten seitlich nach außen versetzten Anlenkpunkt am Chassis schräg und/oder quer nach innen zu einem Anlenkpunkt am Messerbalken erstreckt, so dass sich eine Längsrichtung des genannten Lenkers im Wesentlichen quer zur Förderrichtung durch den Förderkanal beziehungsweise quer zur Fahrtrichtung beziehungsweise da zu einer solchen Querrichtung leicht geneigt erstreckt. Insbesondere kann der Anlenkpunkt des genannten Lenkers am Messerbalken etwa in dessen mittlerem Drittel liegen, so dass sich der Lenker vom seitlich nach außen versetzten Anlenkpunkt am Chassis bzw. Trägerteil schräg nach innen etwa zur Mitte des Messerbalkens erstrecken kann.

Der Verbindungspunkt zwischen dem genannten Lenker und dem Messerbalken kann vorteilhafterweise ebenfalls gelenkig ausgebildet sein, insbesondere als Schwenkgelenk mit einer aufrecht stehenden Achse, die sich im Wesentlichen parallel zu der Schwenkachse des Lenkers am Chassisteil erstreckt.

In Weiterbildung der Erfindung bildet die genannte Lenkeranordung eine vorteilhafterweise auskragende Trägerstruktur, die den Messerbalken nebst daran montierten Messern in der zweiten Phase des Schwenkprozesses trägt. Insbesondere kann der genannte Lenker eine Schwinge bilden, die näherungsweise horizontal beweglich ist, vertikal allerdings soweit starr bzw. nur begrenzt beweglich, daß sie den Messerbalken tragen kann. Der Messerbalken kann ebenfalls etwa horizontal an der Schwinge beweglich gelagert sein, in vertikaler Richtung aber soweit starr bzw. nur begrenzt beweglich, daß der Messerbalken an dem Lenker nicht nach unten wegkippt. Insbesondere kann die Schwinge soweit vertikal beweglich sein, daß sie die Schwenkbewegung des Messerbalkens in der ersten Schwenkphase bezüglich der ersten Schwenkachse mitmachen kann, bei Erreichen der Zwischenstellung aber nicht mehr weiter nach unten fährt bzw. gegen weiteres Absenken gesichert ist.

Um die zweite Schwenkbewegung seitlich nach außen zu erleichtern, kann in vorteilhafter Weiterbildung der Erfindung vorgesehen sein, dass auch die Hubmittel bzw. die Schwenkmittel zum Verschwenken des Messerbalkens um die erste Schwenkachse vom Messerbalken abkuppeln können und/oder von ihrem chassisfesten Punkt abkuppeln können. Insbesondere können zwischen dem Messerbalken oder einem damit verbundenen Trägerteil und einem Stellaktorteil zum Bewegen des Messerbalkens bezüglich der ersten Schwenkachse lösbare Kupplungsmittel vorgesehen sein, die automatisch auskuppeln, wenn der Messerbalken die Zwischenstellung erreicht.

Beispielsweise kann eine Stellaktorschwinge mit einem Kupplungsmaul ein Stellaktorgegenteil am Messerbalken einfangen und freigeben, wenn der Messerbalken in die Zwischenstellung gefahren ist und der Stellaktor über die Zwischenstellung hinaus weiterfährt, beispielsweise weiter abgesenkt wird, so dass sich die Stellaktormimik von dem Messerbalken löst und letzterer dann um die zweite Schwenkachse verschwenkt werden kann, ohne dass die Stellaktormimik dies behindert. Hierbei sackt der Messerbalken nicht weiter ab, da er bspw. mittels eines Anschlags gehalten ist, bspw. über die vorgenannte Lenkeranordnung.

Die Erfindung wird nachfolgend anhand eines bevorzugten Ausführungsbeispiels und zugehöriger Zeichnungen näher erläutert. In den Zeichnungen zeigen:
- Fig. 1:: Eine schematische Seitenansicht einer Erntemaschine in Form eines Ladewagens, wobei eine Aufnahmevorrichtung in Form einer Pickup eine Schneidvorrichtung mit in einen Förderkanal hineinragenden Messern nachgeordnet ist,
- Fig. 2:: Eine schematische Seitenansicht der Schneidvorrichtung in deren Schneidstellung, in der die Messer durch eine Bodenwandung eines Förderkanals in den Förderkanal hineinragen,
- Fig. 3:: Eine schematische Seitenansicht der Schneidvorrichtung ähnlich Fig. 2, wobei der Messerbalken in seiner abgesenkten Zwischenstellung gezeigt ist, in der die Messer aus dem Förderkanal herausgefahren, aber noch unter dem Korpus der Erntemaschine befindlich sind,
- Fig. 4:: Eine schematische Seitenansicht der Schneidvorrichtung ähnlich den Figuren 2 und 3, wobei die Stellaktorvorrichtung zum Anheben und Absenken beziehungsweise Verschwenken des Messerbalkens um die erste Schwenkachse von dem Messerbalken abgekuppelt ist, um den Messerbalken für die Verschwenkung um die zweite Schwenkachse freizugeben,
- Fig. 5:: Eine schematische Seitenansicht der Schneidvorrichtung ähnlich den Figuren 2 bis 4, wobei der Mähbalken in seiner seitlich nach außen geschwenkten Seitenstellung gezeigt ist,
- Fig. 6:: Eine Rückansicht des Förderkanals und des Schneidwerks in der seitlich nach außen geschwenkten Seitenstellung, die auch in Fig. 5 gezeigt ist,

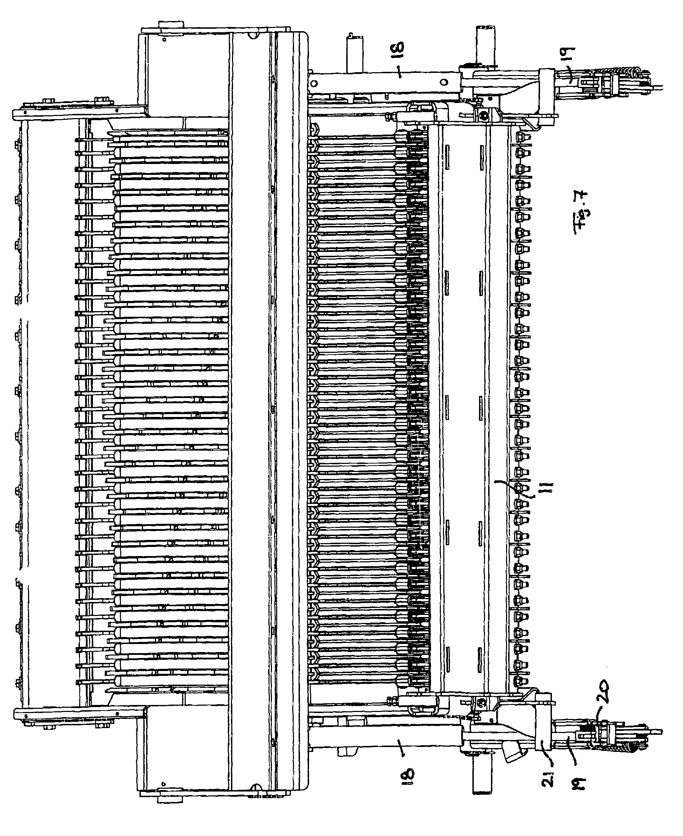

- Fig. 7:: Eine Rückansicht der Schneidvorrichtung in der Zwischenstellung, in der die Messer aus dem Förderkanal herausgefahren und der Messerbalken abgesenkt ist, jedoch noch unter dem Erntemaschinenchassis befindlich ist,

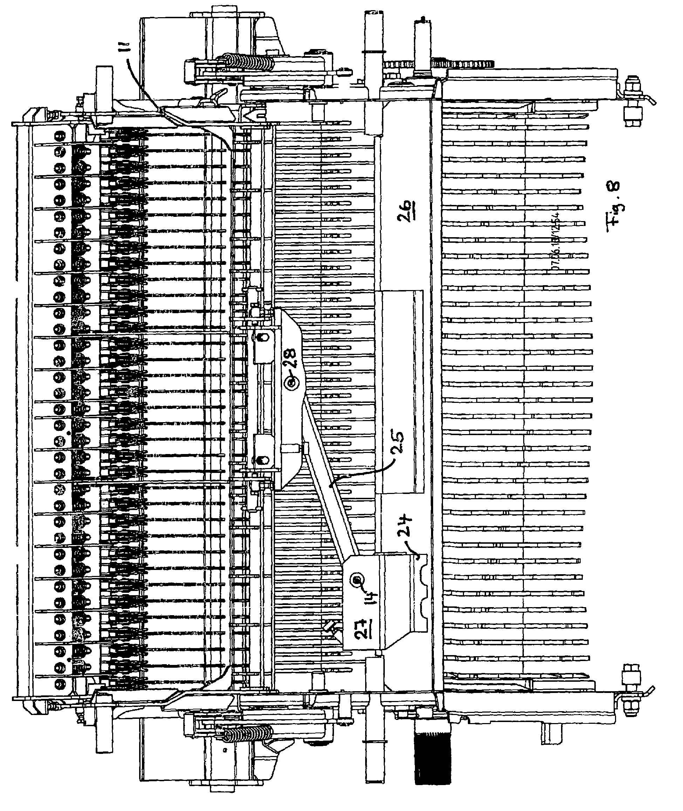

- Fig. 8:: Eine Draufsicht auf die Schneidvorrichtung von unten her, die den Lenker bzw. die Schwinge zeigt, mittels derer der Messerbalken seitlich nach außen schwenkbar ist, wobei der Messerbalken in seiner abgesenkten Zwischenstellung gezeigt ist, und
- Fig. 9:: Eine Draufsicht auf die Schneidvorrichtung ähnlich Fig. 8, wobei der Messerbalken in der seitlich nach außen geschwenkten Seitenstellung dargestellt ist.

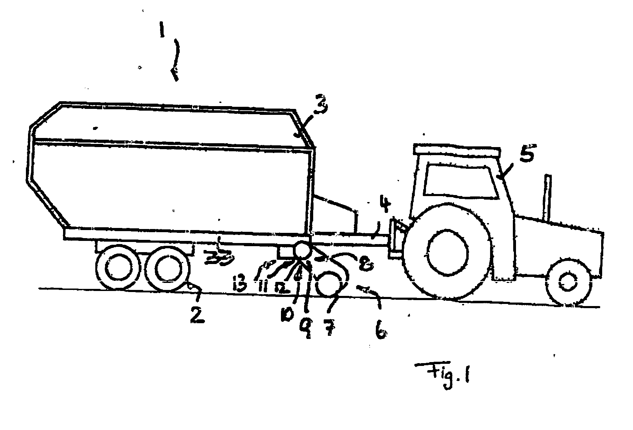

Der in Fig. 1 gezeigte Ladewagen 1 umfasst in an sich bekannter Weise ein Fahrwerk 2, das einen Maschinenrahmen 33 trägt, der über eine Deichsel 4 an einen Schlepper 5 anbaubar ist. Der Maschinenrahmen 33 trägt einen Erntegutspeicher 3, der an seinem vorderen Ende durch eine Aufnahmevorrichtung 6 mit Erntegut beladbar ist, das von der Aufnahmevorrichtung 6 vom Boden aufgenommen wird.

Die genannte Aufnahmevorrichtung 6 umfasst hierbei in der gezeichneten Ausführung eine um eine liegende Querachse rotatorisch antreibbare Stachelwalze 7, die das Erntegut vom Boden aufnimmt und an einen ebenfalls um eine liegende Querachse antreibbaren Förderrotor 8 übergibt, der das Erntegut durch einen Förderkanal 9 hindurch in den genannten Erntegutspeicher 3 fördert.

An dem Förderkanal 9 ist eine Schneidvorrichtung 10 vorgesehen, die einen liegend quer angeordneten Messerbalken 11 umfasst, der eine Vielzahl von in Reihe nebeneinander angeordneten Messern 12 trägt, die von unten her durch den Boden des genannten Förderkanals 9 hindurchtreten und in den Förderkanal 9 hineinragen, so dass das durch den Förderrotor 8 durch den Förderkanal 9 hindurch geförderte Erntegut geschnitten wird.

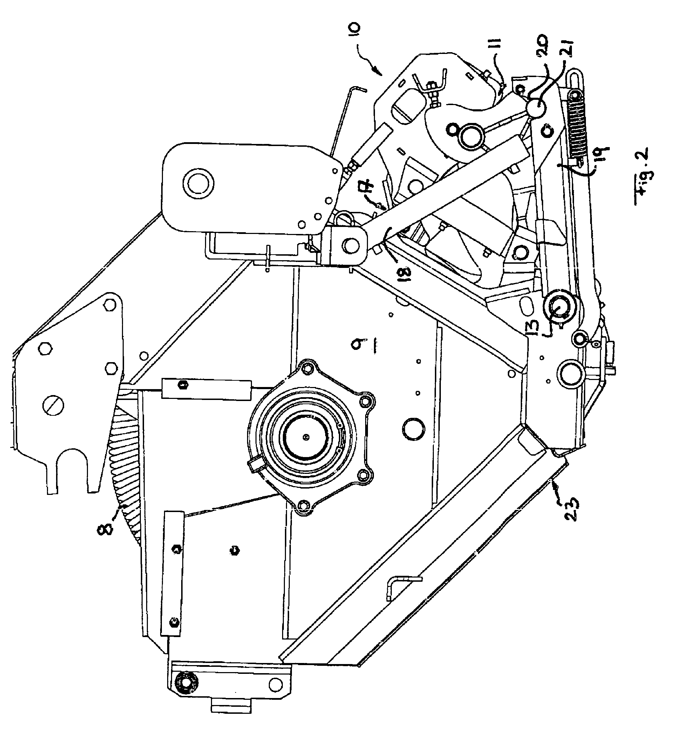

Während Fig. 1 einen Ladewagen 1 zeigt, kann die Schleifvorrichtung 13 in vorteilhafter Weise auch bei einer Presse 1a Verwendung finden, wie sie Fig. 2 zeigt. Die Aufnahmevorrichtung 6 der Presse 1a ist entsprechend der des Ladewagens 1 ausgebildet, so dass auf die vorangehende Beschreibung verwiesen wird. Lediglich wird das Erntegut nicht in einen Erntegutspeicher 3, sondern stattdessen in eine Pressenkammer 3a gefördert. Im Übrigen kann auf die vorausgehende Beschreibung verwiesen werden.

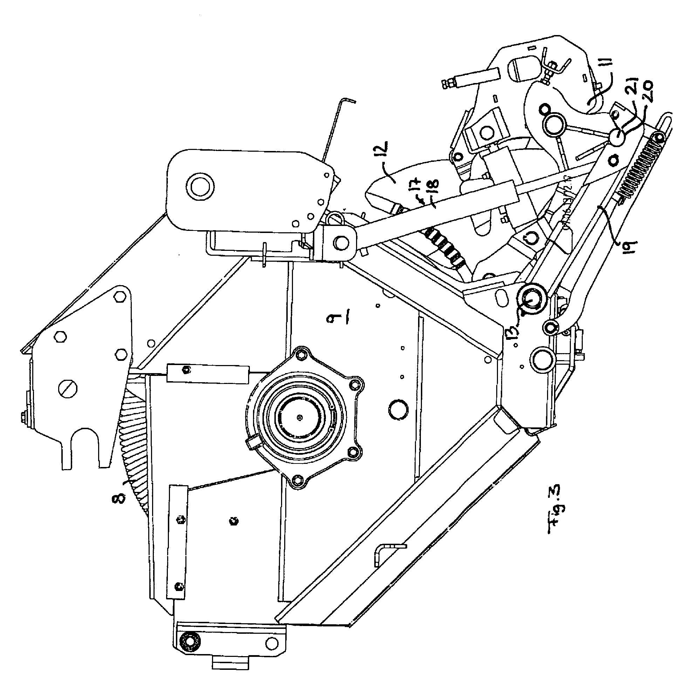

Um die genannten Messer 12 schleifen oder auch warten und austauschen zu können, kann der Messerbalken 11 zunächst in einem ersten Bewegungsschritt abgesenkt werden, so dass die Messer 12 außerhalb des Förderkanals 9 im Wesentlichen unterhalb des Bodens des Förderkanals 9 und unterhalb des Bodens des Erntegutspeichers 3 zu liegen kommen. In einem zweiten Bewegungsschritt kann der genannte Messerbalken sodann im Wesentlichen parallel zur Längsachse des Messerbalkens und damit quer zur Fahrtrichtung des Ladewagens 1 seitlich in eine Schleifposition herausgefahren werden, so dass zumindest das jeweils zu schleifende Messer 12 seitlich neben dem Korpus des Ladewagens 1 bzw. seitlich der Aufnahmevorrichtung 3 und des daran anschließenden Förderkanals 9 zu liegen kommt. Um den ersten Bewegungsschritt ausführen zu können, kann der Messerbalken 12 beispielsweise um eine liegende Querachse heruntergeklappt bzw. geschwenkt werden. Um den genannten zweiten Bewegungsschritt ausführen zu können, kann beispielsweise eine in Fig. 3 angedeutete Schiebeführung 50 vorgesehen sein, die entsprechend den Bewegungspfeilen 60 und 61 eine Bewegungsrichtung in einer liegenden Ebene quer zur Fahrtrichtung besitzt, so dass der Messerbalken 11 seitlich herausgeschoben werden kann.

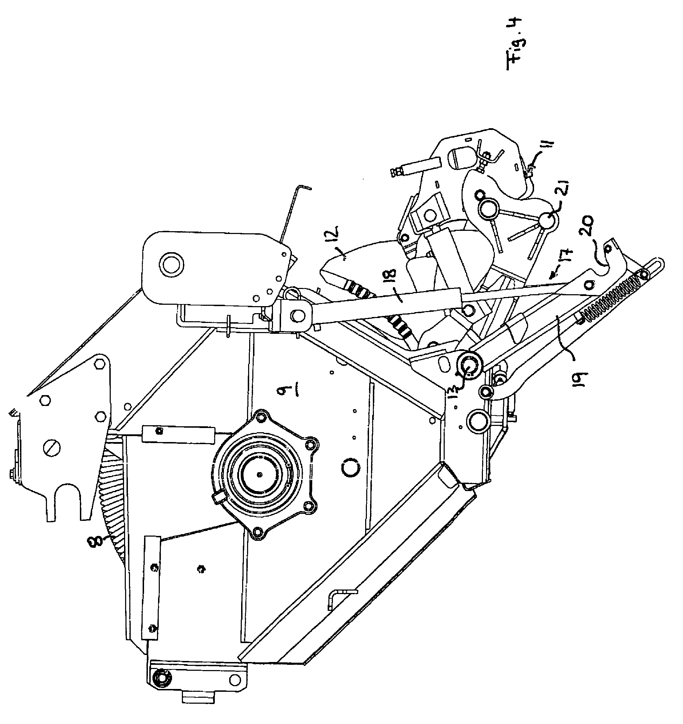

Vorteilhafterweise kann der genannte Messerträger 11, wie die Figuren 3 und 4 zeigen, in zwei Trägerabschnitte 11a und 11 b unterteilt sein, so dass ein erster Trägerabschnitt 11a nach links und ein zweiter Trägerabschnitt 11 b nach rechts, d.h. zu gegenüberliegenden Seiten des Korpus des Ladewagens 1 herausgefahren werden kann. Die Schiebeführung 50 ist hier entsprechend geteilt ausgebildet.

Wie ein Vergleich der Figuren 2 bis 4 zeigt, kann der Messerbalken 11 zusammen mit den daran gelagerten Messern 12 um eine liegende Querachse, die eine erste Schwenkachse 13 bildet, angehoben und abgesenkt bzw. so verschwenkt werden, dass die Messer 12 in den Förderkanal 9 einfahren bzw. aus diesem ausgefahren werden. In der angehobenen Schneidstellung gemäß Fig. 2 treten die Messer 12 durch Schlitze in einer Bodenwandung 16, die den Förderkanal 9 begrenzt, hindurch und ragen in den Förderkanal 9 hinein, um das dadurch geförderte Erntegut zu zerschneiden. In der abgesenkten Zwischenstellung, die Fig. 2 zeigt, ist der Messerbalken 11 so weit abgesenkt bzw. weggeschwenkt, dass die daran gelagerten Messer 12 vollständig aus dem Förderkanal 9 herausgefahren sind.

Die Messer 12 können an dem besagten Messerbalken 11 in an sich bekannter Weise befestigt sein, beispielsweise mittels Federeinrichtungen nachgiebig, um Steinen ausweichen zu können, wobei die Messer 12 in an sich bekannter Weise auswechselbar sein können.

Zum Verschwenken des Messerbalkens 11 um die genannte erste Schwenkachse 13 ist eine Schwenkvorrichtung 17 mit einem Stellaktor 18 vorgesehen, der beispielsweise in Form eines Druckmittelzylinders ausgebildet sein kann, vgl. Fig. 3.

In der abgesenkten Zwischenstellung gemäß Fig. 3 kann der genannte Stellaktor 18 vom Messerbalken 11 gelöst bzw. abgekuppelt werden, insbesondere dadurch, dass der Stellaktor 18 noch weiter über die Zwischenstellung des Messerbalkens 11 hinaus verschwenkt wird bzw. verstellt wird, wie dies Fig. 4 zeigt. Der Stellaktor 18 bzw. ein damit verbundenes Stellaktorteil 19 kann hierfür ein offenes Kupplungsmaul 20 besitzen, das von unten her ein am Messerbalken 11 angebrachtes Kupplungsstück 21 fängt, wenn die Schwenkvorrichtung 17 nach oben fährt, andererseits aber von dem genannten Mitnehmerteil 21 am Messerbalken 11 außer Eingriff gerät, wenn der Stellaktor 18 über die Zwischenstellung hinaus abgesenkt wird, vgl. Fig. 4. Die Kupplungsmittel 22 zwischen Schwenkvorrichtung 17 und Messerbalken 11 können also nach Art einer Mitnehmerverbindung ausgebildet sein, die den Messerbalken 11 in eine Richtung mitnimmt und in die andere Richtung freigibt, wenn der Messerbalken 11 die entsprechende Bewegung nicht mitmacht. Wie Fig. 4 zeigt, kann das vorgenannte Stellaktorteil 19 einen Schwenkhebel bzw. eine Schwinge bilden, die am Chassis 23 bzw. einem damit verbundenen Trägerteil gelenkig angelenkt ist, insbesondere schwenkbar um eine liegende Querachse, die sich parallel zur ersten Schwenkachse 13 des Messerbalkens 11 erstreckt, insbesondere dazu koaxial sein kann.

In der abgesenkten Zwischenstellung gemäß Fig. 3 und 4 ist die Schwenkbarkeit des Messerbalkens 11 durch einen Anschlag begrenzt, so dass der Messerbalken 11 auch bei weiterem Absenken des Stellaktors 18 nicht weiter nach unten schwenkt. Der genannte Anschlag 24 kann dabei einen Teil der Aufhängung der zweiten Schwenkachse 14 bilden, die noch näher erläutert wird.

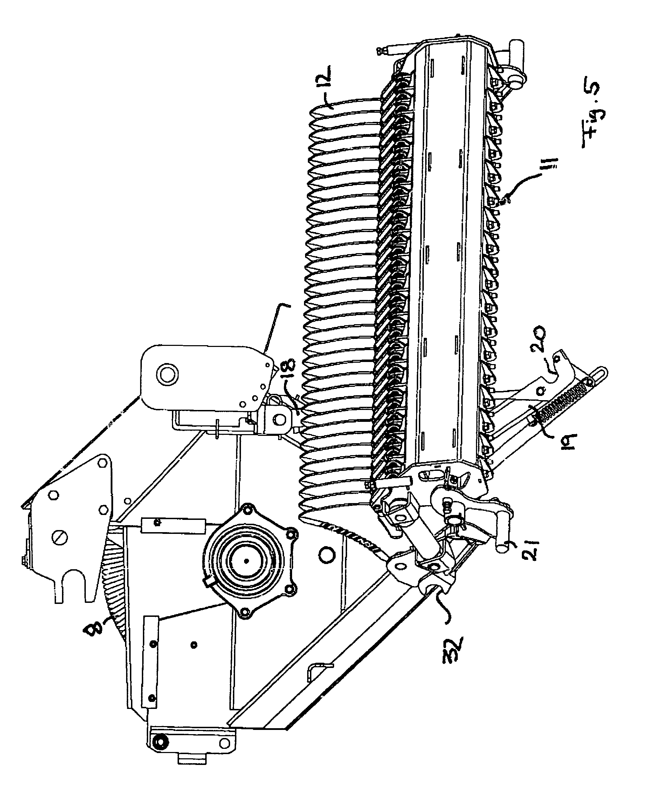

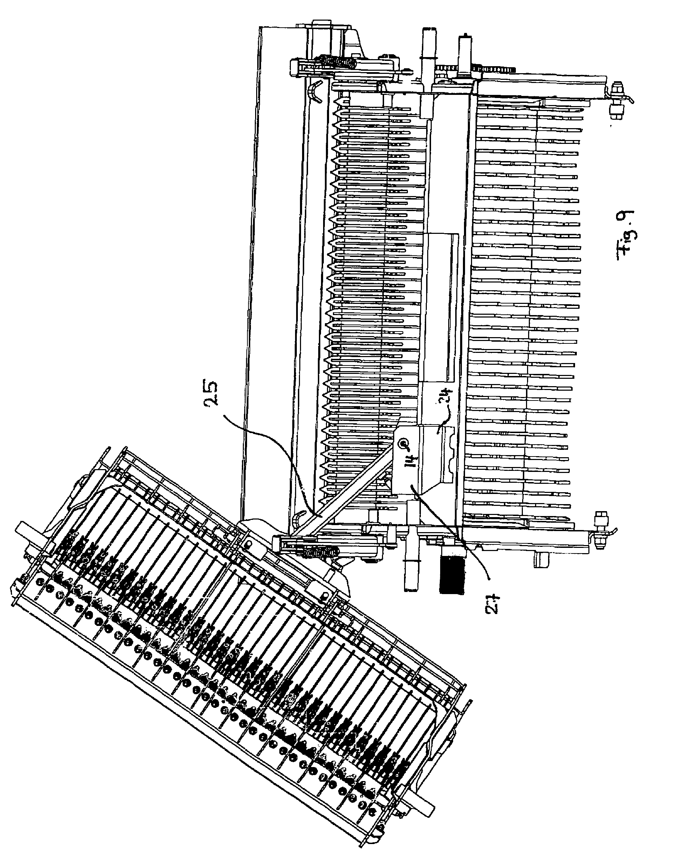

Wie die Figuren 5 und 6 sowie 9 zeigen, kann der Messerbalken 11 mit den daran befestigten Messern 12 nämlich um eine zweite Schwenkachse 14, die sich quer zur ersten Schwenkachse 13 und insbesondere im Wesentlichen aufrecht erstrecken kann, seitlich nach außen geschwenkt werden, so dass die Messer 12 im Bereich der Außenseite des Erntemaschinenkorpus zu liegen kommen. Um diese zweite Schwenkbewegung ausführen zu können, kann der Messerbalken 11 mittels einem Lenker 25 an einem Chassis- oder Trägerteil schwenkbar gelagert sein, welches das Gewicht des Messerbalkens 11 tragen kann. Dies kann beispielsweise ein unter dem Förderkanal 9 verlaufender Querträger 26 sein, vgl. Fig. 9.

Der genannte Lenker 25 kann hierbei einerseits an einem Schwenkstück 27 schwenkbar angelenkt sein und andererseits mit dem Messerbalken 11 verbunden sein, insbesondere gelenkig, vorzugsweise schwenkbar um eine aufrechte Schwenkachse 28. Die Verbindung des Lenkers 25 mit dem Messerbalken 11 ist dabei derart, dass der Messerbalken 11 nur um die genannte aufrechte Schwenkachse 28 gegenüber dem Lenker 25 schwenken kann, im Übrigen aber festgehalten ist, insbesondere nicht nach unten abknicken kann.

Das andere Ende des Lenkers 25, das an dem Schwenkstück 27 chassisseitig angelenkt ist, kann über das genannte Schwenkstück 27 auf und ab wippen, um die Schwenkbewegung des Messerbalkens 11 um die genannte erste Schwenkachse 13 mitmachen zu können. Hierzu ist das Schwenkstück 27 um eine liegende Querachse, insbesondere koaxial zur ersten Schwenkachse 13 schwenkbar gelagert. Zusätzlich kann der Lenker 25 gegenüber dem Schwenkstück 27 um die genannte zweite Schwenkachse 14 schwenken, die sich quer zur ersten Schwenkachse 13 erstreckt und in der abgesenkten Zwischenstellung des Schwenkstücks 27 im Wesentlichen aufrecht erstreckt.

Die Schwenkbarkeit des Schwenkstücks 27 um die liegende Querachse ist begrenzt, um ein ungewolltes Absenken des Messerbalkens 11 über die Zwischenstellung hinaus zu vermeiden. Wie Fig. 9 zeigt, kann hierzu das Schwenkstück 27 den vorgenannten Anschlag 24 umfassen, der sich bei Erreichen der Zwischenstellung an dem Querträger 26 abstützen kann.

Wie Fig. 9 zeigt, ist die zweite Schwenkachse 14 bzw. die chassisseitige Schwenkachse des Lenkers 25 aus der Mitte des Förderkanals 9 heraus zu der Fahrzeugseite versetzt angeordnet, zu der die Messer 12 herausgeschwenkt werden sollen, insbesondere etwa im äußeren Drittel des Querträgers 26. Andererseits ist das messerbalkenseitige Ende des Lenkers 25 etwa in der Mitte des genannten Messerbalkens 11 an diesem schwenkbar angelenkt.

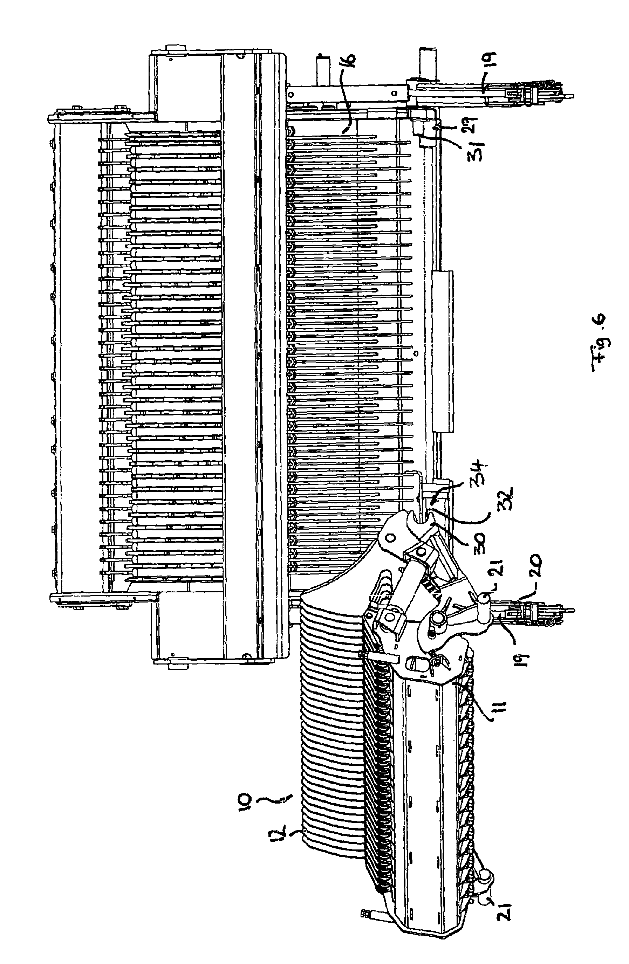

Damit der Messerbalken 11 mittels des Lenkers 25 die Schwenkbewegung seitlich nach außen ausführen kann, sind die Gelenkteile, die die erste Schwenkachse 13 definieren, lösbar ausgebildet, so dass sich der Messerbalken 11 von der genannten ersten Schwenkachse 13 lösen kann, um nach außen zu fahren. Die genannten Gelenkteile 29 und 30 können hierbei insbesondere einen Achsbolzen 31 und ein den genannten Achsbolzen 31 aufnehmendes Kupplungsmaul 32 umfassen, in dem sich der Achsbolzen 31 drehen kann. Wie Fig. 6 zeigt, kann der Achsbolzen 31 dabei ortsfest an einer Unterseite des Förderkanals 9 bzw. allgemein chassisfest oder an einem mit dem Chassis verbundenen Trägerteil angeordnet sein, während das genannte Kupplungsmaul 32 an dem Messerbalken 11 oder einem damit verbundenen Teil angeordnet, insbesondere fest verbunden sein kann, so dass sich das Kupplungsmaul 32 beim Verschwenken des Messerbalkens 11 mitdreht bzw. mitverschwenkt. Das Kupplungsmaul 32 besitzt dabei eine offene Seite, die in der abgesenkten Zwischenstellung des Messerbalkens 11 sich näherungsweise in der Bewegungsebene erstreckt, in der der Messerbalken seitlich nach außen gefahren werden kann. Die genannte Bewegungsbahn zwischen der Zwischenstellung und der Seitenstellung kann näherungsweise in einer liegenden Ebene angeordnet sein. Insbesondere kann der Messerbalken 11 mit den Messern 12 etwa horizontal nach außen zur Seite verschwenkt werden, was durch eine aufrechte Anordnung der Schwenkachsen des Lenkers 25 erzielt werden kann.

Ist der Messerbalken 11 in die Zwischenstellung abgesenkt, die die Figuren 3 und 4 zeigen, ist das genannte Kupplungsmaul 32 derart orientiert, dass der Messerbalken 11 in der Schwenkbewegungsebene, die der Lenker 25 vorgibt, freigängig ist, und sich die Gelenkteile 29 und 30, die die erste Schwenkachse 13 definieren, lösen können. Wie ein Vergleich der Figuren 5 und 6 zeigt, können die genannten Gelenkteile 29 und 30 paarweise auf beiden Seiten des Messerbalkens 11 angeordnet sein, also rechts und links, wobei gegebenenfalls auch noch an Zwischenabschnitten entsprechende Gelenkteile 29 und 30 in Form von Achsbolzen 31 und Kupplungsmaul 32 vorgesehen sein könnten.

Damit ergibt sich folgende Funktion: Um die Messer 12 begutachten, schleifen, austauschen oder in anderer Weise warten oder bearbeiten zu können, wird zunächst der Messerbalken 11 aus der in Fig. 2 gezeigten Schneidstellung abgesenkt. Hierzu wird der Stellaktor 18 der Schwenkvorrichtung 17 betätigt, insbesondere ausgefahren, um das Stellaktorteil 18 abzusenken. Ist die in Fig. 3 gezeigte Zwischenstellung erreicht, in der die Messer 12 vollständig aus dem Förderkanal 9 ausgefahren sind, verhindert der Lenker 25 über den Anschlag 24 am Schwenkstück 27 ein weiteres Absenken des Messerbalkens 11. Beim weiteren Ausfahren bzw. Betätigen des Stellaktors 18 löst sich die Schwenkvorrichtung 17 vom Messerbalken 11, vgl. Fig. 4. Nach Lösen der Schwenkvorrichtung 17 ist die erste Phase des Schwenkprozesses abgeschlossen, der Messerbalken 11 ist nunmehr bereit, seitlich nach außen ausgeschwenkt zu werden. Die erste Schwenkachse 13 hat sich hierzu automatisch gelöst bzw. freigängig gestellt. Das Kupplungsmaul 32 der Kupplungsmittel 34 gibt den Achsbolzen 31 frei, so dass die Gelenkteile 29 und 30 des ersten Schwenkgelenks 13 sich lösen können. Der Lenker 25 und dessen Schwenkachsen 14 und 28 steuern die seitliche Ausschwenkbewegung und tragen dabei den Messerbalken 11, bis dieser die in den Figuren 6 und 9 gezeigte Seitenstellung erreicht, in der die Messer 12 dann bearbeitet, gewechselt oder in anderer Weise gewartet werden können.

Um die Messer 12 wieder in den Förderkanal einzufahren, wird mit umgekehrtem Ablauf der Betätigungsschritte vorgegangen. Dabei kuppeln die Kupplungsmittel 34 die erste Schwenkachse 13 wieder automatisch ein, sobald der Messerbalken 11 die zuvor beschriebene Zwischenstellung erreicht. Ebenso kuppeln beim Betätigen des Stellaktors 18 dessen Kupplungsmittel 22 wieder am Messerbalken 11 ein, so dass der Messerbalken nach oben gefahren werden kann.

## Patentansprüche

1. Erntemaschine, insbesondere Ladewagen und/oder Ballenpresse, mit einem Schneidwerk (10), das an einem Messerbalken (11) angeordnete Messer (12) umfasst, die in ihrer Schneidstellung in einen Förderkanal (9) für das Erntegut hineinragen, wobei die Messer (12) durch Verschwenken des Messerbalkens (11) um eine erste Schwenkachse (13), die sich liegend quer zur Förderkanallängsachse erstreckt, aus dem Förderkanal (9) heraus in eine Zwischenstellung fahrbar sind und durch Verschwenken des Messerbalkens (11) um eine zweite Schwenkachse (14), die sich quer zur ersten Schwenkachse (13) erstreckt, zur Seite eines Erntemaschinenkorpus hin in eine Seitenstellung fahrbar sind, wobei die erste Schwenkachse (13) lösbare Gelenkteile (29), (30) umfasst, die zum Verschwenken um die zweite Schwenkachse (14) trennbar sind, **dadurch gekennzeichnet, dass** Kupplungsmittel (34) zum automatischen Entkuppeln der lösbaren Gelenkteile (29), (30) der ersten Schwenkachse (13) bei Erreichen der Zwischenstellung vorgesehen sind.

2. Erntemaschine nach dem vorhergehenden Anspruch, wobei Steuermittel zum Steuern der Kupplungsmittel (34) in Abhängigkeit einer Winkelstellung des Messerbalkens (11) bezüglich der ersten Schwenkachse (13) vorgesehen sind, wobei die genannten Steuermittel vorzugsweise derart ausgebildet sind, dass die Kupplungsmittel (34) die erste Schwenkachse (13) verbunden oder verriegelt hält, solange der Messerbalken (11) in einer von der Zwischenstellung abweichenden Winkelstellung ist, und/oder die erste Schwenkachse (13) nur in der Zwischenstellung freigängig macht.

3. Erntemaschine nach einem der vorhergehenden Ansprüche, wobei die Kupplungsmittel (34) ein zu einer Seite hin offenes Kupplungsmaul (32) umfassen, in dem ein Schwenkachsteil der ersten Schwenkachse (13) drehbar aufnehmbar ist und gegen Bewegungen um die zweite Schwenkachse (14) verriegelbar ist, wobei die offene Seite des Kupplungsmauls (32) in Richtung der Bewegung des Messerbalkens (11) aus der Zwischenstellung heraus in die Seitenstellung ausgerichtet ist.

4. Erntemaschine nach dem vorhergehenden Anspruch, wobei das Kupplungsmaul (32) am Messerbalken (11) oder einem damit verbundenen Trägerteil drehfest angeordnet ist und sich beim Verschwenken des Messerbalkens (11) um die erste Schwenkachse (13) verdreht und/oder verschwenkt derart, dass das Kupplungsmaul (32) nur in der Zwischenstellung des Messerbalkens (11) in Richtung der Bewegbarkeit des Messerbalkens (11) um die zweite Schwenkachse (14) offen und in der eingefahrenen Schneidstelle in eine andere Richtung ausgerichtet ist.

5. Erntemaschine nach einem der vorhergehenden Ansprüche, wobei der Messerbalken (11) mittels einer Lenkeranordnung mit der zweiten Schwenkachse (14) verbunden ist und/oder die zweite Schwenkachse (14) mittels einer Lenkeranordnung an einem Chassis- oder Trägerteil der Erntemaschine angebunden ist.

6. Erntemaschine nach dem vorhergehenden Anspruch, wobei die Lenkeranordnung einen Lenker (25) umfasst, der einerseits mit dem Messerbalken (11) verbunden ist und andererseits an dem Chassis- oder Trägerteil um die zweite Schwenkachse (14) schwenkbar gelagert ist.

7. Erntemaschine nach dem vohergehenden Anspruch, wobei der chassisseitige Anlenkpunkt des Lenkers (25) auf der Mitte des Förderkanals (9) zu einer Seite des Erntemaschinenkorpus hin versetzt angeordnet ist, insbesondere zu der Seite, zu der der Messerbalken herausschwenkbar ist.

8. Erntemaschine nach einem der vorhergehenden Ansprüche 5 bis 7, wobei die Lenkeranordnung eine Trägeranordnung bildet, die den Messerbalken zwischen der Zwischenstellung und der Seitenstellung trägt.

9. Erntemaschine nach einem der vorhergehenden Ansprüche 5 bis 8, wobei die Lenkeranordnung bezüglich der ersten Schwenkachse (13) begrenzt schwenkbar ist, insbesondere bei Erreichen der Zwischenstellung des Messerbalkens (11) gegen weiteres Verschwenken und/oder Absenken gesichert, insbesondere durch einen Anschlag abgestützt ist derart, dass die Lenkeranordnung beim seitlichen Herausschwenken des Messerbalkens (11) den genannten Messerbalken (11) trägt.

10. Erntemaschine nach dem vorhergehenden Anspruch, wobei die Lenkeranordnung eine auskragende Schwinge umfasst, die den Messerbalken (11) beim Herausschwenken nach außen trägt.

11. Erntemaschine nach einem der vorhergehenden Ansprüche, wobei eine Schwenkvorrichtung (17) zum Verschwenken des Messerbalkens (11) um die erste Schwenkachse (13) Kupplungsmittel (22) zum automatischen Abkuppeln der Schwenkvorrichtung (17) vom Messerbalken (11) bei Erreichen dessen Zwischenstellung aufweist.

12. Erntemaschine nach dem vorhergehenden Anspruch, wobei die Schwenkvorrichtung (17) ein Stellaktorteil (19) umfasst, das von unten her ein mit dem Messerbalken (11) verbundenes Mitnehmerteil (21) untergreift und bei Bewegungen nach oben hin mitnimmt und nach unten hin von besagtem Mitnehmerteil lösbar ist.

## Claims

1. A harvester, in particular a self-loading wagon and/or a baler, comprising a cutting unit (10) which comprises blades (12) which are arranged at a blade bar (11) and which project into a conveying channel (9) for the harvest in their cutting position, wherein the blades (12) can be moved out of the conveying channel (9) into an intermediate position by pivoting the blade bar (11) about a first pivot axle (13) which extends horizontally transversely to the longitudinal axle of the conveying channel and can be moved outwardly to the side of a body of the harvester into a side position by pivoting the blade bar (11) about a second pivot axle (14) which extends transversely to the first pivot axle (13), wherein the first pivot axle (13) comprises releasable articulation pieces (29, 30) which can be separated for pivoting about the second pivot axle (14), **characterized in that** coupling means (34) are provided for the automatic decoupling of the releasable articulation pieces (29, 30) of the first pivot axle (13) on reaching the intermediate position.

2. A harvester in accordance with the preceding claim, wherein control means are provided for controlling the coupling means (34) in dependence on an angular position of the blade bar (11) with respect to the first pivot axle (13), with the named control means preferably being configured such that the coupling means (34) holds the first pivot axle (13) connected or locked as long as the blade bar (11) is in an angular position differing from the intermediate position and/or only makes the first pivot axle (13) free-moving in the intermediate position.

3. A harvester in accordance with one of the preceding claims, wherein the coupling means (34) comprise a coupling mouth (32) which is open toward a side and in which a pivot axle part of the first pivot axle (13) is rotatably receivable and is lockable against movements about the second pivot axle wherein the open side of the coupling mouth (32) is oriented in the direction of the movement of the blade bar (11) out of the intermediate position into the position.

4. A harvester in accordance with the preceding claim, wherein the coupling mouth (32) is rotationally fixedly arranged at the blade bar (11) or at carrier part connected thereto and rotates and/or pivots about the first pivot axle (13) on a pivoting of the blade bar (11) such that the coupling mouth (32) is only open in the intermediate position of the blade bar (11) in the direction of the movability of the blade bar (11) about the second pivot axle (14) and is oriented in a different direction in the retracted cutting position.

5. A harvester in accordance with one of the preceding claims, wherein the blade bar (11) is connected to the second pivot axle (14) by means of a control arm arrangement and/or the second pivot axle (14) is connected to a chassis part or carrier part of the harvester by means of a control arm arrangement.

6. A harvester in accordance with the preceding claim, wherein the control arm arrangement comprises a control arm (25) which is connected to the blade bar (11), on the one hand, and which is pivotably supported about the second pivot axle (14) at the chassis part or carrier part, on the other hand.

7. A harvester in accordance with the preceding claim, wherein the chassis-side pivot connection point of the control arm (25) is arranged at the center of the conveying channel (9) offset to a side of the harvester body, in particular to the side to which the blade bar is outwardly pivotable.

8. A harvester in accordance with one of the preceding claims 5 to 7, wherein the control arm arrangement forms a carrier arrangement which carries the blade bar between the intermediate position and the side position.

9. A harvester in accordance with one of the preceding claims 5 to 8, wherein the control arm arrangement is pivotable with limitations with respect to the first pivot axle (13), in particular secured against further pivoting and/or lowering on reaching the intermediate position of the blade bar (11), and is in particular supported by an abutment such that the control arm arrangement carries the named blade bar (11) on the lateral pivoting out of the blade bar (11).

10. A harvester in accordance with the preceding claim, wherein the control arm arrangement comprises a projecting rocker which carries the blade bar (11) on the outward pivoting to the outside.

11. A harvester in accordance with one of the preceding claims, wherein a pivot apparatus (17) for pivoting the blade bar (11) about the first pivot axle (13) has coupling means (22) for the automatic decoupling of the pivot apparatus (17 from the blade bar (11) on reaching its intermediate position.

12. A harvester in accordance with the preceding claim, wherein the pivot apparatus (17) comprises an adjustment actuator part (19) which engages an entrainer part (21) connected to the blade bar (11) from below and entrains it on upward movements and is downwardly releasable from said entrainer part.

## Revendications

1. Moissonneuse, en particulier véhicule de chargement et/ou botteleuse, comprenant un mécanisme de coupe (10), qui comprend des lames (12) disposées sur un porte-lames (11), lesdites lames dépassant dans un conduit de transport (9) pour la récolte dans leur position de coupe, les lames (12) pouvant être déplacées hors du conduit de transport (9) dans une position intermédiaire par un pivotement du porte-lames (11) autour d'un premier axe de pivotement (13), qui s'étend horizontalement et transversalement à l'axe longitudinal du conduit de transport, et pouvant être déplacées en direction du côté d'un corps de moissonneuse dans une position latérale par un pivotement du porte-lames (11) autour d'un second axe de pivotement (14), qui s'étend transversalement au premier axe de pivotement (13), le premier axe de pivotement (13) comprenant des pièces d'articulation (29), (30) séparables, qui peuvent être séparées pour le pivotement autour du second axe de pivotement (14), **caractérisée en ce que** des moyens de couplage (34) sont prévus pour désaccoupler automatiquement les pièces d'articulation (29), (30) séparables du premier axe de pivotement (13) lorsque la position intermédiaire est atteinte.

2. Moissonneuse selon la revendication précédente, dans laquelle des moyens de commande sont prévus pour commander les moyens de couplage (34) en fonction d'une position angulaire du porte-lames (11) par rapport au premier axe de pivotement (13), lesdites moyens de commande étant formés de préférence de telle manière que les moyens de couplage (34) maintiennent le premier axe de pivotement (13) relié ou verrouillé, tant que le porte-lames (11) se trouve dans une position angulaire différente de la position intermédiaire, et/ou libèrent le premier axe de pivotement (13) uniquement dans la position intermédiaire.

3. Moissonneuse selon l'une quelconque des revendications précédentes, dans laquelle les moyens de couplage (34) comprennent une mâchoire de couplage (32) ouverte sur un côté, dans laquelle une partie d'axe de pivotement du premier axe de pivotement (13) peut être reçue rotative et peut être verrouillée de façon à ne pas pouvoir bouger autour du second axe de pivotement (14), le côté ouvert de la mâchoire de couplage (32) étant orienté dans la direction du mouvement du porte-lames (11) hors de la position intermédiaire vers la position latérale.

4. Moissonneuse selon la revendication précédente, dans laquelle la mâchoire de couplage (32) est disposée solidaire en rotation sur le porte-lames (11) ou une partie porteuse reliée à celui-ci et tourne et/ou pivote autour du premier axe de pivotement (13) lors du pivotement du porte-lames (11) de telle manière que la mâchoire de couplage (32) est ouverte dans la direction de mobilité du porte-lames (11) autour du second axe de pivotement (14) uniquement dans la position intermédiaire du porte-lames (11) et orientée dans une autre direction dans la position de coupe rentrée.

5. Moissonneuse selon l'une quelconque des revendications précédentes, dans laquelle le porte-lames (11) est relié au second axe de pivotement (14) au moyen d'un ensemble barre conductrice et/ou le second axe de pivotement (14) est relié à une partie de châssis ou une partie porteuse de la moissonneuse au moyen d'un ensemble barre conductrice.

6. Moissonneuse selon la revendication précédente, dans laquelle l'ensemble barre conductrice comprend une barre conductrice (25), qui est reliée d'un côté au porte-lames (11) et qui de l'autre côté est montée pivotante autour du second axe de pivotement (14) sur la partie de châssis ou partie porteuse.

7. Moissonneuse selon la revendication précédente, dans laquelle le point d'articulation côté châssis de la barre conductrice (25) est disposé au milieu conduit de transport (9) décalé en direction d'un côté du corps de la moissonneuse, en particulier, du côté sur lequel le porte-lames peut être rabattu.

8. Moissonneuse selon l'une des revendications précédentes 5 à 7, dans laquelle l'ensemble barre conductrice forme un ensemble porteur qui porte le porte-lames entre la position intermédiaire et la position latérale.

9. Moissonneuse selon l'une des revendications précédentes 5 à 8, dans laquelle l'ensemble barre conductrice peut être pivoté de manière limitée par rapport au premier axe de pivotement (13), est en particulier bloqué afin qu'il ne continue pas à pivoter et/ou descendre lorsque la position intermédiaire du porte-lames (11) est atteinte, est soutenu en particulier par une butée de telle manière que l'ensemble barre conductrice porte ledit porte-lames (11) lors du rabattement latéral du porte-lames (11).

10. Moissonneuse selon la revendication précédente, dans laquelle l'ensemble barre conductrice comprend un élément oscillant en porte-à-faux qui porte le porte-lames (11) vers l'extérieur lors du rabattement.

11. Moissonneuse selon l'une des revendications précédentes, dans laquelle un dispositif de pivotement (7) destiné à faire pivoter le porte-lames (11) autour du premier axe de pivotement (13) comporte des moyens de couplage (22) pour découpler automatiquement le dispositif de pivotement (17) du porte-lames (11) lorsque sa position intermédiaire est atteinte.

12. Moissonneuse selon la revendication précédente, dans laquelle le dispositif de pivotement (17) comprend une pièce d'actionneur de réglage (19) qui saisit par dessous une pièce d'entraînement (21) reliée au porte-lames (11) et l'entraîne lors de mouvements vers le haut et qui peut être séparée de ladite pièce d'entraînement lors de mouvements vers le bas.
